# EUROPÄISCHE PATENTSCHRIFT

(11) **EP 2 567 365 B1**
(45) Veröffentlichungstag und Bekanntmachung des Hinweises auf die Patenterteilung: **05.11.2014**
(21) Anmeldenummer: 11717199.1
(22) Anmeldetag: 03.05.2011
(51) Int. Cl.: G07F 7/10

(54) **VERFAHREN ZUR PERSONALISIERUNG EINES TRAGBAREN DATENTRÄGERS, INSBESONDERE EINER CHIPKARTE**
METHOD FOR PERSONALIZING A PORTABLE DATA STORAGE MEDIUM, IN PARTICULAR A CHIP CARD
PROCÉDÉ DE PERSONNALISATION D'UN SUPPORT DE DONNÉES PORTABLE, EN PARTICULIER D'UNE CARTE À PUCE

(30) Priorität: 04.05.2010 DE 102010019195
(43) Veröffentlichungstag der Anmeldung: 13.03.2013
(73) Patentinhaber: Giesecke & Devrient GmbH, 81677 München (DE)
(72) Erfinder: OTTE, Günter, 80686 München (DE); GERHARDT, Nils, 80333 München (DE)
(86) Internationale Anmeldenummer: PCT/EP2011/002199
(87) Internationale Veröffentlichungsnummer: WO 2011/138009

(56) Entgegenhaltungen:
- EP-A1- 1 338 996
- EP-A1- 1 376 492
- EP-A2- 0 311 417
- EP-A2- 1 260 944
- WO-A1-01/53915
- WO-A1-01/57789
- WO-A1-93/07697
- WO-A2-2007/087432
- US-A- 4 855 578
- US-A- 5 745 571
- US-A- 5 959 276
- US-A1- 2008 116 261
- US-B1- 6 402 028
- Rankl and Effing: "Handbuch der Chipkarten", 31. Dezember 2008 (2008-12-31), Hanser, Germany, XP002639502, Seite 217 - Seite 219 Seite 410 - Seite 416 Seite 670 - Seite 675

## Beschreibung

Die Erfindung betrifft ein Verfahren zur Personalisierung eines tragbaren Datenträgers, insbesondere einer Chipkarte, sowie ein System zur Personalisierung eines tragbaren Datenträgers mit einem im Körper des tragbaren Datenträgers vorgesehenen Chip.

Die Erfindung liegt auf dem Gebiet der Herstellung von tragbaren Datenträgern, welche einen Chip in der Form eines integrierten Schaltkreises umfassen, der in einem Körper des tragbaren Datenträgers vorgesehen ist. Ein tragbarer Datenträger kann dabei beliebige Arten von Speichermedien, wie z.B. USB-Sticks, betreffen. In einer bevorzugten Ausführungsform stellt der Datenträger eine Chipkarte (z.B. eine Smartcard) dar, wobei der Chip der Chipkarte als Speicherchip bzw. als Prozessorchip mit entsprechendem Mikroprozessor ausgestaltet sein kann. Bei Datenträgern, welche nicht als Chipkarten ausgestaltet sind, ist der Körper des Datenträgers insbesondere durch dessen Gehäuse gebildet. Demgegenüber ist der Körper des Datenträgers bei Chipkarten der Kartenkörper der Karte, in dem der Chip integriert ist. Dieser Kartenkörper ist in der Regel aus Kunststoff gefertigt.

Tragbare Datenträger werden häufig individuell für eine Person bzw. Institution hergestellt, so dass es erforderlich ist, dass der Datenträger für die entsprechende Person bzw. Institution personalisiert wird. Unter Personalisierung ist dabei die Hinterlegung bzw. das Aufbringen von Informationen auf den Chip oder den Körper des Datenträgers zu verstehen, die individuell einer einzelnen Person/ Institution oder einem einzelnen Datenträger zugeordnet sind. Diese Informationen können beispielsweise Name und Anschrift des (zukünftigen) Kartenbesitzers bzw. kartenbezogene Schlüssel umfassen. Es wird hierbei zwischen optischer und elektrischer Personalisierung unterschieden. Bei der optischen Personalisierung werden optisch für einen Benutzer sichtbare bzw. über entsprechende Mittel (wie z.B. Linsen) sichtbar machbare Informationen auf dem Körper des tragbaren Datenträgers aufgebracht. Bei der elektrischen Personalisierung werden elektrisch auslesbare Informationen auf dem tragbaren Datenträger hinterlegt, insbesondere auf dem Chip des tragbaren Datenträgers oder gegebenenfalls auf anderen Speichermedien des tragbaren Datenträgers, wie z.B. einem Magnetstreifen.

Im Regelfall wird die Personalisierung eines tragbaren Datenträgers von einer Personalisierungseinheit durchgeführt, welche die auf den jeweiligen Datenträger aufzubringenden Personalisierungsdaten von einem Dienstleister oder dem Herausgeber des Datenträgers erhält. Die Daten müssen dabei regelmäßig zumindest teilweise über öffentliche Netze von dem Dienstleister bzw. dem Kartenherausgeber an die Personalisierungseinheit übermittelt. Da es sich bei den Personalisierungsdaten um hochsensible persönliche Informationen handelt, werden bei der Übermittlung dieser Daten geeignete kryptographische Verschlüsselungsverfahren verwendet. Dies hat den Nachteil, dass entsprechende Verschlüsselungsmechanismen bereitgestellt werden müssen und in der Personalisierungseinheit ein Sicherheitsmodul zum Entschlüsseln der übertragenen Daten vorgesehen sein muss.

In dem Dokument US 6,335,799 B1 ist ein Verfahren zur sofortigen Ausgabe von personalisierten Karten an einen Benutzer beschrieben, wobei vor Ort auf die Karte personenspezifische Informationen des Kartennutzers über einen Drucker aufgedruckt werden. Die in diesem Verfahren verwendeten Karten weisen keinen IC-Chip auf.

In dem Dokument EP 1 023 703 B1 ist ein Verfahren zur elektrischen Personalisierung einer Smartcard beschrieben, wobei von dem Kartenherausgeber Personalisierungsdaten in der Form einer Datei an eine Personalisierungsstelle übergeben werden. Die Übergabe der Datei erfolgt z.B. über eine Floppy-Disk bzw. eine sichere Netzwerkverbindung. In der Personalisierungsstelle wird anschließend die Personalisierung der Smartcard basierend auf der übergebenen Datei vorgenommen.

In dem Dokument US 5,534,857 ist ein weiteres Verfahren zur Personalisierung einer Smartcard beschrieben, wobei die Karte vor Ort von einem Händler personalisiert wird und anschließend an einen Kunden ausgegeben wird. Im Rahmen der Personalisierung werden dabei über kryptographisch gesicherte Datenverbindungen Informationen zwischen einem Computer des Kartenherausgebers und Terminal-Einrichtungen des Händlers ausgetauscht.

Aus der EP 0 311 417 A2 ist es bekannt einen Kartenkörper gemäß den auf dem Chip des Kartenkörpers gespeicherten Daten optisch im Hochprägeverfahren zu personalisieren.

Aufgabe der Erfindung ist es, die Personalisierung eines tragbaren Datenträgers basierend auf einer einfachen Infrastruktur zu ermöglichen.

Diese Aufgabe wird durch das Verfahren gemäß Patentanspruch 1 bzw. ein System gemäß Patentanspruch 5 gelöst. Weiterbildungen der Erfindung sind in den abhängigen Ansprüchen definiert.

Das erfindungsgemäße Verfahren dient zur Personalisierung eines tragbaren Datenträgers und insbesondere einer Chipkarte, wobei der Datenträger mit einem in einem Körper des tragbaren Datenträgers vorgesehenen Chip ausgestattet ist. Zur Personalisierung wird in einem Schritt a) einer Personalisierungseinheit ein tragbarer Datenträger bereitgestellt, dessen Chip Daten zur Personalisierung des tragbaren Datenträgers enthält. Unter Daten zur Personalisierung des Körpers des tragbaren Datenträgers sind hier und im Folgenden Personalisierungsdaten zu verstehen, welche auf dem Körper des tragbaren Datenträgers aufzubringen bzw. zu hinterlegen sind. Das heißt, diese Personalisierungsdaten betreffen nicht solche Personalisierungsdaten, mit denen der Chip des tragbaren Datenträgers personalisiert ist. Im Besonderen sind unter Daten zur Personalisierung des tragbaren Datenträgers optische Personalisierungsdaten zu verstehen, welche optisch sichtbar auf dem Datenträger-Körper aufzubringen sind. Gegebenenfalls können die Daten zur Personalisierung des Körpers des tragbaren Datenträgers auch Daten für einen auf dem Körper des tragbaren Datenträgers vorgesehenen Magnetstreifen umfassen, welche in diesem Magnetstreifen zu hinterlegen sind.

In Schritt c) des erfindungsgemäßen Verfahrens empfängt die Personalisierungseinheit von dem Chip des in Schritt a) bereitgestellten Datenträgers die Daten zur Personalisierung des Körpers des tragbaren Datenträgers und personalisiert den Körper basierend auf den empfangenen Daten. Der Empfang der Personalisierungsdaten erfolgt insbesondere über eine entsprechende Schnittstelle zwischen Chip und Personalisierungseinheit, wobei die Daten über die Schnittstelle z.B. durch die Personalisierungseinheit ausgelesen werden können. Ebenso können die Daten von der Personalisierungseinheit über die Schnittstelle angefordert werden, woraufhin die Daten vom Chip an die Personalisierungseinheit übertragen werden.

Das erfindungsgemäße Verfahren zeichnet sich dadurch aus, dass die zur Personalisierung des Körpers des tragbaren Datenträgers erforderlichen Daten bereits im Chip des tragbaren Datenträgers vorab hinterlegt sind, so dass eine verschlüsselte Übertragung dieser Daten an die Personalisierungseinheit nicht mehr erforderlich ist. Insbesondere kann dabei auf die Verwendung eines entsprechenden Sicherheitsmoduls in der Personalisierungseinheit zum Entschlüsseln der übermittelten verschlüsselten Daten verzichtet werden. Auf diese Weise wird die Infrastruktur bei der Durchführung der Personalisierung vereinfacht.

In einer bevorzugten Variante des erfindungsgemäßen Verfahrens enthält der Chip des bereitgestellten tragbaren Datenträgers nicht nur Daten zur Personalisierung des Datenträger-Körpers. Vielmehr umfasst der Chip des tragbaren Datenträgers auch Personalisierungsdaten, mit denen der Chip elektrisch personalisiert ist. Auf diese Weise wird nach Abschluss der Personalisierung ein tragbarer Datenträger erhalten, bei dem sowohl der Körper des tragbaren Datenträgers als auch dessen Chip in geeigneter Weise mit kartenspezifischen Daten personalisiert ist.

In einer besonders bevorzugten Variante des erfindungsgemäßen Verfahrens werden im Rahmen des Schritts a) die Daten zur Personalisierung des Körpers des tragbaren Datenträgers in einer separat von der Personalisierungseinheit ausgebildeten Personalisierungsstelle auf den Chip des tragbaren Datenträgers übertragen und der tragbare Datenträger anschließend an die Personalisierungseinheit übergeben. Gemäß dieser Variante kann die Infrastruktur zur Personalisierung besonders flexibel ausgestaltet werden, da die Personalisierungsstelle, welche eine geeignete Vorpersonalisierung des tragbaren Datenträgers durch Hinterlegung von Daten zur Personalisierung des Datenträger-Körpers auf den Datenträger-Chip durchführt, an beliebiger Stelle räumlich getrennt von der Personalisierungseinheit zur Durchführung der Personalisierung des Datenträger-Körpers angeordnet sein kann. Auch in dieser Variante ist eine verschlüsselte Übertragung von Daten zur Personalisierung des Körpers des tragbaren Datenträgers über öffentliche Netze nicht erforderlich. Es muss lediglich sichergestellt sein, dass die vorpersonalisierten tragbaren Datenträger in geeigneter Weise von der entfernten Personalisierungsstelle an die Personalisierungseinheit übergeben werden, wobei hierzu ohne weiteres unter anderem geeignete logistische Dienstleistungsunternehmen eingesetzt werden können. Zur Verbesserung der Sicherheit können die Daten zur Personalisierung des Körpers verschlüsselt im Chip des Datenträgers gespeichert werden.

Gemäß der Erfindung werden die Daten zur Personalisierung des Körpers des tragbaren Datenträgers in der Personalisierungsstelle verschlüsselt auf den Chip des tragbaren Datenträgers übertragen, wobei die verschlüsselten Daten durch den Chip entschlüsselt werden. Für die Entschlüsselung werden insbesondere ein oder mehrere kartenindividuelle Schlüssel verwendet. Zur Realisierung dieser Variante der Erfindung ist vorzugsweise eine Anwendung bzw. ein Applet auf dem Chip des tragbaren Datenträgers hinterlegt, mit dem die Entschlüsselung der verschlüsselten Daten durchgeführt wird. Die entschlüsselten Daten werden dabei auf dem Datenträger in der Form von einem oder mehreren Datenelementen, insbesondere in der Form einer Datei, bereitgestellt, welche bei der Durchführung die Personalisierung an die Personalisierungseinheit übermittelt wird.

In einer weiteren, bevorzugten Variante des erfindungsgemäßen Verfahrens wird eine Vorort-Personalisierung des tragbaren Datenträgers ermöglicht, indem der tragbare Datenträger einer Personalisierungseinheit bereitgestellt wird, welche in einer Ausgabestelle zur Ausgabe des tragbaren Datenträgers an Benutzer angeordnet ist. Beispielsweise kann diese Ausgabestelle die Filiale einer Bank sein, in der ein tragbarer Datenträger in der Form einer Bank- bzw. Kreditkarte an Kunden ausgegeben wird.

In einer weiteren Variante des erfindungsgemäßen Verfahrens empfängt die Personalisierungseinheit von dem Chip des tragbaren Datenträgers in Schritt c) des Verfahrens zunächst alle Daten zur Personalisierung des Körpers des tragbaren Datenträgers, beispielsweise durch das Auslesen bzw. Anfordern einer oder mehrerer Dateien, in denen die Daten hinterlegt sind. Erst nach Empfang aller Daten führt die Personalisierungseinheit dann die Personalisierung des Körpers des tragbaren Datenträgers durch, wobei die Personalisierung insbesondere durch in der Personalisierungseinheit hinterlegte Steuerkommandos erfolgt. Das heißt, die Personalisierung wird in dieser Variante selbsttätig durch die Personalisierungseinheit durchgeführt, ohne dass hierfür entsprechende Informationen auf dem Chip des tragbaren Datenträgers verwendet werden.

Gemäß dem erfindungsgemäßen Verfahren ist es auch möglich, dass die Personalisierungseinheit von dem Chip des tragbaren Datenträgers in Schritt c) des Verfahrens neben den Daten zur Personalisierung des Körpers des tragbaren Datenträgers ein oder mehrere Steuerkommandos empfängt, mittels denen die Personalisierungseinheit bei der Durchführung der Personalisierung gesteuert wird. Diese Variante der Erfindung kann insbesondere durch eine entsprechende Anwendung bzw. ein Applet auf dem Chip des tragbaren Datenträgers realisiert werden. Diese Ausführungsform hat den Vorteil, dass die Steuerung der durch die Personalisierungseinheit durchgeführten Personalisierung über entsprechende Befehle bzw. Anweisungen auf dem tragbaren Datenträger erfolgt, wodurch das Personalisierungsverfahren flexibel an die Erfordernisse des jeweiligen tragbaren Datenträgers angepasst werden kann.

Gemäß der Erfindung werden die Steuerkommandos schrittweise in der Personalisierungseinheit empfangen, wobei nach dem Empfang eines Steuerkommandos zunächst die Ausführung des Steuerkommandos in der Personalisierungseinheit veranlasst wird und anschließend das nächste Steuerkommando empfangen wird.

Gemäß dem erfindungsgemäßen Verfahren kann vor der eigentlichen Durchführung der Personalisierung durch die Personalisierungseinheit eine geeignete Authentisierung vorgeschaltet sein, mit der die Berechtigung der Personalisierungseinheit zur Durchführung der Personalisierung des bereitgestellten tragbaren Datenträgers überprüft wird. Nur bei erfolgreicher Authentisierung wird dann die Personalisierung gestartet.

Wie bereits oben erwähnt, empfängt die Personalisierungseinheit von dem Chip des tragbaren Datenträgers die Daten zur Personalisierung des Datenträger-Körpers vorzugsweise über eine Schnittstelle zwischen Chip und Personalisierungseinheit. Diese Schnittstelle kann kontaktlos oder kontaktbehaftet ausgestaltet sein. In einer besonders bevorzugten Variante wird eine USB-Schnittstelle verwendet. Das heißt, der tragbare Datenträger verfügt zum Datenaustausch über einen entsprechenden USB-Anschluss.

In einer weiteren Ausgestaltung des erfindungsgemäßen Verfahrens wird die Personalisierung in Schritt c) von einer Personalisierungseinheit durchgeführt, welche mehrere Personalisierungsstationen umfasst, wobei vorzugsweise in jeder Personalisierungsstation eine andere Art der Personalisierung vorgenommen wird bzw. andere Personalisierungsdaten auf dem tragbaren Datenträger aufgebracht werden. Dabei kann eine Personalisierungsstation z.B. eine Hochprägestation zum Einprägen von Zeichen auf dem Datenträger-Körper sein und eine andere Personalisierungsstation kann eine Station zur Aufbringung einer Lasergravur bzw. zum Aufdrucken von Bildern sein.

Neben dem oben beschriebenen Verfahren umfasst die Erfindung ferner ein-System zur Personälisierung eines tragbaren Datenträgers mit einem Chip, wobei die Personalisierungseinheit derart ausgestaltet ist, dass sie im Betrieb von dem Chip des tragbaren Datenträgers Daten zur Personalisierung des Körpers des tragbaren Datenträgers empfängt und den Körper basierend auf den empfangenen Personalisierungsdaten personalisiert.

Teil der Erfindung ist weiter eine Personalisierungsstation, welche zum Vorbereiten des im erfindungsgemäßen Verfahren in Schritt a) bereitgestellten Datenträgers dient. Diese Personalisierungsstation, welche vorzugsweise entfernt von der oben beschriebenen Personalisierungseinheit angeordnet ist, zeichnet sich dadurch aus, dass sie im Betrieb auf den Chip eines jeweiligen tragbaren Datenträgers Daten zur Personalisierung des Körpers des tragbaren Datenträgers überträgt.

Die Erfindung kann ferner bei einem tragbaren Datenträger, insbesondere eine Chipkarte, der im erfindungsgemäßen Verfahren in Schritt a) bereitgestellt wird, zur Anwendung kommen. Dieser Datenträger zeichnet sich dadurch aus, dass sein Chip Daten zur Personalisierung des Körpers des tragbaren Datenträgers enthält.

Ausführungsbeispiele der Erfindung werden nachfolgend anhand der beigefügten Figuren detailliert beschrieben.

Es zeigen:
- Fig. 1: eine schematische Darstellung von Komponenten, welche in einer Ausführungsform des erfindungsgemäßen Verfahren an der Personalisierung beteiligt sind; und
- Fig. 2: ein Ablaufdiagramm, welches zwei Varianten des erfindungsgemäßen Personalisierungsverfahrens unter Verwendung der Komponenten der Fig. 1 verdeutlicht.

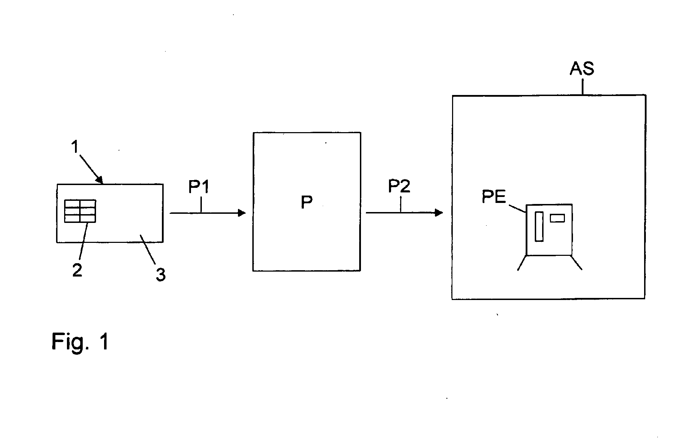

Die nachfolgend beschriebenen Ausführungsformen des erfindungsgemäßen Verfahrens werden in Bezug auf die Personalisierung eines tragbaren Datenträgers in der Form einer Chipkarte erläutert, welche in Fig. 1 mit Bezugszeichen 1 bezeichnet ist. Die Erfindung ist jedoch mit gleichen Vorteilen auch für Datenträger in anderen Ausführungsformen einsetzbar, etwa für Datenträger in Uhrenform oder in der Form eines Schreibgerätes.

Die Chipkarte gemäß Fig. 1 umfasst einen IC-Chip 2, der in einem Kartenkörper 3 der Chipkarte 1 integriert ist. Ziel der hier beschriebenen Variante des erfindungsgemäßen Verfahrens ist es dabei, auf dem Kartenkörper 3 der Chipkarte 1 individuelle, nur für diese Chipkarte gültige Personalisierungsinformationen, z.B. personenspezifische Informationen des späteren Benutzers der Chipkarte, aufzubringen. Diese Personalisierungsinformationen umfassen insbesondere auf den Kartenkörper aufzudruckende bzw. einzuprägende Daten, wie z.B. den Namen des späteren Kartenbesitzers oder ein Bild des Kartenbesitzers. Im Folgenden werden diese Personalisierungsinformationen auch als äußere Personalisierungsdaten bezeichnet. Gegebenenfalls können diese Personalisierungsdaten auch Daten für den Magnetstreifen der Chipkarte 1 umfassen, sofern auf der Karte ein solcher Magnetstreifen vorgesehen ist. Diese Daten werden dann in dem Magnetstreifen auf dem Körper 3 hinterlegt. Desweiteren können äußere Personalisierungsdaten beispielsweise sog. CW (Card Verfication Value)/CVC (Card Validation Code)-Codes umfassen, welche insbesondere bei Kreditkarten verwendet werden und ein weiteres Sicherheitsmerkmal zur Verifikation der Kreditkarte darstellen. Ein solcher Code ist insbesondere eine mehrstellige Prüfziffer, welche zusätzlich zur Kartennummer auf der Kreditkarte aufgedruckt ist.

Gemäß der Darstellung der Fig. 1 wird zunächst eine noch nicht personalisierte Chipkarte 1 an eine Personalisierungsstelle P übergeben, was mit dem Pfeil P1 angedeutet ist. Bei dieser Personalisierungsstelle kann es sich beispielsweise um einen zentralen Personalisierer einer Bank oder um eine dezentral, z.B. in einer Bankfiliale, angeordnete lokale Personalisierungsstelle handeln, die dafür vorgesehen ist, lediglich den Chip 2 und nicht den Kartenkörper 3 entsprechender Chipkarten 1, insbesondere in der Form von Bankkarten (z.B. EC-Karten) oder Kreditkarten, elektrisch zu personalisieren.

Nach der Vorpersonalisierung der Chipkarten in der Personalisierungsstelle P werden diese an eine Ausgabestelle AS übergeben. Bei der Ausgabestelle AS kann es sich beispielsweise um räumlich von der Personalisierungsstelle getrennte Filiale einer Bank handeln, welche die Karten später an Kunden ausgibt. Personalisierungsstelle P und Ausgabestelle AS können aber auch in unmittelbarer Nachbarschaft zueinander angeordnet oder in einer gemeinsamen Anlage realisiert sein, so daß ein Transport von Chipkarten 1 zwischen Personalisierungsstelle P und Ausgabestelle AS z.B. über ein Transportband erfolgen kann.

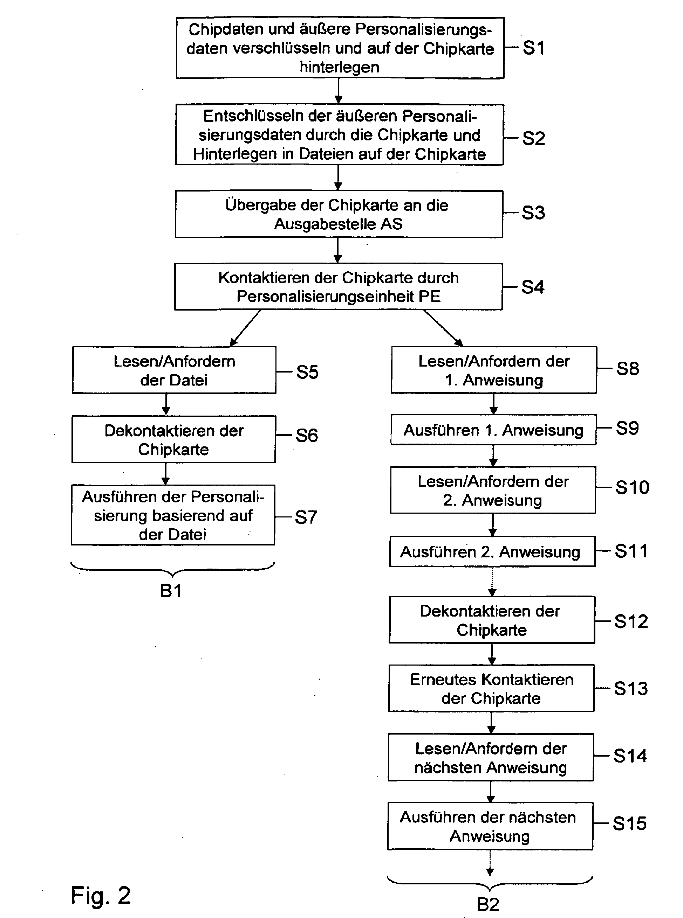

In der Ausgabestelle AS ist eine Personalisierungsmaschine bzw. Personalisierungseinheit PE vorgesehen, welche den Kartenkörper 3 der übergebenen Chipkarte 1 mittels äußerer Personalisierungsdaten personalisiert. Das heißt, die Personalisierungseinheit PE führt entsprechende Operationen durch, mit denen kartenspezifische Daten in die Karte eingeprägt bzw. aufgedruckt werden. Die Übergabe der Chipkarte von der zentralen Personalisierungsstelle P an eine Ausgabestelle AS ist in Fig. 1 mit dem Pfeil P2 angedeutet. Die Übergabe entspricht dabei einem Transport der Chipkarte 1 von der Personalisierungsstelle P zur Ausgabestelle AS. Der Transport kann bei räumlicher Trennung durch logistische Dienstleister, etwa auf postalischem Wege, erfolgen oder, bei räumlicher Nähe, z.B. über Transportbänder.
Wie weiter unten noch näher in Bezug auf Fig. 2 erläutert wird, zeichnet sich das erfindungsgemäße Verfahren dadurch aus, dass in der zentralen Personalisierungsstelle P auf den Chip 2 der Chipkarte 1 nicht nur die Daten zur Personalisierung des Chips aufgebracht werden, sondern auch die später verwendeten äußeren Personalisierungsdaten zur Personalisierung des Kartenkörpers. Hierdurch wird der aus dem Stand der Technik bekannte Nachteil vermieden, dass auf einem separaten, kryptographisch gesicherten Kommunikationspfad die entsprechenden äußeren Personalisierungsdaten an die Ausgabestelle AS übermittelt werden müssen. Demzufolge kann in der Personalisierungseinheit PE auf ein entsprechendes Sicherheitsmodul zum Entschlüsseln der kryptographisch übertragenen äußeren Personalisierungsdaten verzichtet werden, wodurch die Personalisierungseinheit einfacher ausgestaltet sein kann.

Fig. 2 zeigt ein Ablaufdiagramm, welches zwei Varianten eines erfindungsgemäßen Personalisierungsverfahrens verdeutlicht, die basierend auf der in Fig. 1 gezeigten Infrastruktur durchgeführt werden. Eine Variante des Verfahrens wird durch die Verzweigung B1 und die andere Variante durch die Verzweigung B2 wiedergegeben, wobei die Schritte S1 bis S4 vor den beiden Verzweigungen für beide Varianten im Wesentlichen gleich sind. Die Schritte S1 und S2 des Verfahrens der Fig. 2 werden dabei in der Personalisierungsstelle P durchgeführt. Der Schritt S3 stellt die Übergabe der Chipkarte 1 an eine dezentrale Ausgabestelle AS dar. Die restlichen Schritte S5 bis S15 betreffen in der Ausgabestelle AS durchgeführte Prozesse.

In Schritt S1 des Verfahrens der Fig. 2 werden Chipdaten, mit denen der Chip 2 der Chipkarte 1 personalisiert wird, sowie die oben beschriebenen äußeren Personalisierungsdaten zur Personalisierung des Kartenkörpers 3 der Chipkarte 1 verschlüsselt und auf dem Chip der Chipkarte hinterlegt. Die Übertragung dieser Daten auf die Chipkarte 1 erfolgt dabei, wie bereits oben erwähnt, in der Personalisierungsstelle P, wobei hierfür eine geeignete Schnittstelle zwischen dem Chip der Chipkarte 1 und einer entsprechenden Recheneinheit in der Personalisierungsstelle P verwendet wird, wie z.B. eine USB-Schnittstelle. Auf dem Chip der Chipkarte befindet sich eine Anwendung bzw. ein Applet, das die verschlüsselt übertragenen äußeren Personalisierungsdaten anschließend entschlüsselt und in der Form von Dateien und/ oder Datenfeldern bereitstellt, wie durch den Schritt S2 in Fig. 2 angedeutet ist.

Die Chipkarte wird anschließend an eine Ausgabestelle AS übergeben, wie durch den Schritt S3 in Fig. 2 wiedergegeben wird. In der Ausgabestelle AS befindet sich die Personalisierungseinheit PE, welche anschließend die Chipkarte 1 basierend auf den äußeren Personalisierungsdaten, welche in der auf dem Chip 2 generierten Datei hinterlegt sind, personalisiert. Hierfür wird die Chipkarte gemäß Schritt S4 durch die Personalisierungseinheit bzw. Personalisierungsmaschine PE kontaktiert, um Daten aus der Datei auszulesen bzw. von dieser anzufordern. Die Kontaktierung kann dabei wiederum auf der oben beschriebenen USB-Schnittstelle erfolgen.

In der Variante gemäß dem Zweig B1 wird die Chipkarte 1 nur einmalig von einer Kontaktiereinheit der Personalisierungsmaschine kontaktiert, wohingegen in der Variante gemäß dem Zweig B2 die Personalisierungsmaschine mehrere Personalisierungsstationen mit separaten Kontaktiereinheiten zur Kontaktierung der Chipkarte umfasst, so dass der Schritt S4 in der Variante gemäß dem Zweig B2 das Kontaktieren der Chipkarte durch die Kontaktiereinheit der ersten Personalisierungsstation darstellt. In der Ausführungsform gemäß dem Zweig B1 wird die Datei mit den äußeren Personalisierungsdaten en bloc durch die Personalisierungseinheit PE von der Karte ausgelesen bzw. von der Karte angefordert und an diese übertragen (Schritt S5). In dem optionalen Schritt S6 kann die Chipkarte dann wieder dekontaktiert werden, jedoch kann gegebenenfalls auch der Kontakt zwischen Chipkarte und Personalisierungseinheit aufrecht erhalten werden.

Schließlich wird in Schritt S7 die Personalisierung basierend auf den äußeren, in der Datei enthaltenen Personalisierungsdaten selbständig durch die Personalisierungseinheit PE durchgeführt. Gegebenenfalls kann die Personalisierungseinheit dabei auch mehrere Personalisierungsstationen (ohne separate Kontaktiereinheiten) umfassen, wobei in jeder Personalisierungsstation ein entsprechender Schritt der Personalisierung des Kartenkörpers 3 der Chipkarte 1 vorgenommen wird. Insbesondere kann in der Personalisierungseinheit eine Hochprägestation zum Einprägen von kartenspezifischen bzw. benutzerspezifischen Daten vorgesehen sein sowie weitere optische Personalisierungsstationen, mit denen z.B. Lasergravuren aufgebracht werden bzw. weitere Informationen auf den Kartenkörper aufgedruckt werden, wie z.B. ein Bild des späteren Kartenbesitzers. Nach Abschluss der Personalisierung des Kartenkörpers durch die Personalisierungseinheit PE in der Ausgabestelle AS kann die Karte schließlich dem Kunden übergeben werden, für den die Karte hergestellt wurde.

Im Unterschied zur Variante B1, bei der die Personalisierung selbsttätig durch die Personalisierungseinheit PE durchgeführt wird, fungiert in der Variante gemäß dem Zweig B2 die Chipkarte 1 als Personalisierungsmaster, welcher die durch die Personalisierungseinheit PE durchgeführte Personalisierung über entsprechende Steuerkommandos an die Personalisierungseinheit steuert. Diese Variante hat den Vorteil, dass der Bedarf an Rechenleistung für die Durchführung der Personalisierung auf Seiten der Ausgabestelle AS reduziert ist und ferner die Sicherheit und Flexibilität des Verfahrens erhöht wird, da die Steuerung der Personalisierung durch die Chipkarte selbst übernommen wird. Zur Umsetzung der Variante gemäß dem Zweig B2 werden die oben erwähnten Steuerkommandos neben den äußeren Personalisierungsdaten in der in Schritt S2 generierten Datei hinterlegt, d.h. bereits in der Personalisierungsstelle P wird bei der Generierung der Datei die Steuerung der Personalisierung festgelegt.

Nach dem ersten Kontaktieren der Chipkarte gemäß Schritt S4 wird in der Variante gemäß dem Zweig B2 eine erste Anweisung mit den entsprechend für die Anweisung nötigen äußeren Personalisierungsdaten durch die erste Personalisierungsstation der Personalisierungseinheit PE aus der Datei ausgelesen bzw. angefordert (Schritt S8). Anschließend wird die erste Anweisung ausgeführt (Schritt S9). Diese Anweisung kann beispielsweise den Prozess des Einprägens kartenspezifischer Daten durch die erste Personalisierungsstation in der Form einer Hochprägestation umfassen. Anschließend können weitere Anweisungen über die Kontaktiereinheit der ersten Personalisierungsstation eingelesen werden. Diese Anweisungen können z.B. das Einprägen von weiteren Informationen betreffen, welche an einer anderen Stelle auf dem Kartenkörper der Chipkarte als die zuvor gemäß der ersten Anweisung eingeprägten Informationen aufzubringen sind. Diese weiteren Anweisungen werden schließlich in der Personalisierungseinheit ausgeführt. Das Einlesen und Ausführen von weiteren Ausweisungen ist in Fig. 2 beispielhaft basierend auf einer zweiten Anweisung durch Schritte S10 und S11 angedeutet. Gegebenenfalls folgen nach der zweiten Anweisung zusätzliche Anweisungen, was durch einen gepunkteten Pfeil zwischen Schritt S11 und S12 in Fig. 2 angedeutet ist. Es kann vorgesehen sein, daß die Chipkarte 1 zwischen den einzelnen Anweisungen oder nach der Ausführung bestimmter Anweisungen jeweils dekontaktiert und wieder neu kontaktiert wird.

Nach Abarbeitung aller Anweisungen für die erste Personalisierungsstation wird die Chipkarte dekontaktiert (Schritt S12) und zu einer zweiten Personalisierungsstation transportiert bzw. es wird in der gleichen Station eine andere Bearbeitungseinheit eingeschaltet. In der zweiten Personalisierungsstation bzw. durch die zweite Bearbeitungseinheit wird die Chipkarte über eine geeignete Kontaktiereinheit neu kontaktiert wird (Schritt S13). Anschließend werden analog zu der ersten Personalisierungsstation wiederum entsprechende Anweisungen mit den geeigneten äußeren Personalisierungsdaten durch die zweite Personalisierungsstation ausgelesen bzw. angefordert, wobei die gerade ausgelesene Anweisung sofort ausgeführt wird. Dies ist in Fig. 2 durch die Schritte S14 und S15 angedeutet. Die zweite Personalisierungsstation kann dabei beispielsweise eine Station zum Aufbringen bzw. Aufdrucken eines Bildes auf der Chipkarte sein. Das Verfahren kann sich in geeigneter Weise durch das Anfordern bzw. Auslesen und Ausführen von weiteren Anweisungen durch die zweite Personalisierungsstation und gegebenenfalls weitere Personalisierungsstationen fortsetzen, bis alle Personalisierungsdaten in der Datei auf dem Chip der Chipkarte abgearbeitet sind und die Personalisierung abgeschlossen ist. Die Fortsetzung des Verfahrens ist dabei in Fig. 2 durch einen gepunkteten Pfeil unterhalb des Schritts S15 angedeutet. In beiden der oben beschriebenen Varianten gemäß den Zweigen B1 und B2 der Fig. 2 erfolgt die Personalisierung des Kartenkörpers 3 der Chipkarte 1 basierend auf Informationen aus einer Datei, welche im Chip der Chipkarte vorab hinterlegt wurde. Dabei werden Informationen aus der Datei von der Personalisierungseinheit PE angefordert bzw. ausgelesen. Es besteht in beiden Varianten gegebenenfalls auch die Möglichkeit, dass Rückmeldungen von der Personalisierungseinheit PE an die gerade kontaktierte Chipkarte zurückgegeben werden. Beispielsweise kann nach bei der Ausführung einer Anweisung gemäß dem Zweig B2 an die Chipkarte rückgemeldet werden, dass die entsprechende Anweisung korrekt ausgeführt wurde. Es kann weiter vorgesehen sein, daß eine Chipkarte 1 auf solche Rückmeldungen dynamisch reagiert und z.B. den Fortschritt der weiteren Bearbeitung steuert.

Die oben beschriebenen Ausführungsformen des erfindungsgemäßen Verfahrens weisen eine Reihe von Vorteilen auf. Insbesondere kann eine Vorort-Personalisierung des Kartenkörpers von Chipkarten am Ort der Ausgabe der Chipkarten vorgenommen werden, ohne dass die hierfür erforderlichen Personalisierungsdaten über eine separate kryptographische Datenverbindung übertragen werden müssen. Hierdurch wird die Sicherheit des Verfahrens erhöht. Darüberhinaus muss in der Personalisierungseinheit der entsprechenden Ausgabestation kein Sicherheitsmodul mehr vorgesehen sein, welches die über eine Datenverbindung verschlüsselt übermittelten Daten entschlüsselt. Die technischen Anforderungen an die Personalisierungseinheit sind deshalb gegenüber herkömmlichen Verfahren geringer. Darüber hinaus besteht in einer speziellen Variante die Möglichkeit, dass die Personalisierung durch entsprechende Kommandos auf der Chipkarte selbst gesteuert wird, wodurch das Verfahren in Bezug auf die Durchführung der Personalisierung flexibel wird und in der Personalisierungseinheit weniger Rechenleistung benötigt wird.

## Patentansprüche

1. Verfahren zur Personalisierung eines tragbaren Datenträgers (1), insbesondere einer Chipkarte, mit einem in einem Körper (3) des tragbaren Datenträgers (3) vorgesehenen Chip (2); wobei
a) einer Personalisierungseinheit (PE) ein tragbarer Datenträger (1) bereitgestellt wird, dessen Chip (2) Daten zur Personalisierung des Körpers (3) des tragbaren Datenträgers (1) enthält, die optische Personalisierungsdaten umfassen, welche in einem nachfolgenden Schritt optisch sichtbar auf den Körper (3) aufgebracht werden;
b) die Daten zur Personalisierung des Körpers (3) des tragbaren Datenträgers (1) in einer separat von der Personalisierungseinheit (PE) ausgebildeten Personalisierungsstelle (P) auf den Chip (2) des tragbaren Datenträgers (1) übertragen werden und der tragbare Datenträger (1) anschließend zur Personalisierungseinheit (PE) transportiert wird,
c) die Personalisierungseinheit (PE) von dem Chip (2) des tragbaren Datenträgers (1) die Daten zur Personalisierung des Körpers (3) des tragbaren Datenträgers (1) empfängt und den Körper (3) basierend auf den empfangenen Daten personalisiert,
**dadurch gekennzeichnet, dass** die Daten zur Personalisierung des Körpers (3) des tragbaren Datenträgers (1) verschlüsselt auf den Chip (2) des tragbaren Datenträgers (1) übertragen werden, wobei die verschlüsselten Daten durch den Chip (2) entschlüsselt werden,
dass der eigentlichen Durchführung der Personalisierung durch die Personalisierungseinheit (PE) eine Authentisierung vorgeschaltet wird, mit der die Berechtigung der Personalisierungseinheit (PE) zur Durchführung der Personalisierung des bereitgestellten tragbaren Datenträgers (1) überprüft wird,
dass die Personalisierungseinheit (PE) in Schritt c) von dem Chip (2) des tragbaren Datenträgers (1) neben den Daten zur Personalisierung des Körpers (3) des tragbaren Datenträgers (1) ein oder mehrere Steuerkommandos empfängt, mittels derer die Personalisierungseinheit (PE) bei der Durchführung der Personalisierung gesteuert wird, und dass die Steuerkommandos schrittweise in der Personalisierungseinheit (PE) empfangen werden, wobei nach dem Empfang eines Steuerkommandos zunächst die Ausführung des Steuerkommandos in der Personalisierungseinheit (PE) veranlasst und anschließend das nächste Steuerkommando empfangen wird.

2. Verfahren nach Anspruch 1, **dadurch gekennzeichnet, dass** der Chip (2) des tragbaren Datenträgers (1) neben den Daten zur Personalisierung des Körpers (3) des tragbaren Datenträgers (1) Personalisierungsdaten enthält, mit denen der Chip (2) elektrisch personalisiert ist.

3. Verfahren nach einem der vorhergehenden Ansprüche, **dadurch gekennzeichnet, dass** die Personalisierungseinheit (PE) in Schritt c) zunächst alle Daten zur Personalisierung des Körpers (3) des tragbaren Datenträgers (1) von dem Chip (2) des tragbaren Datenträgers (1) empfängt und anschließend den Körper (3) basierend auf den empfangenen Daten personalisiert, wobei die Personalisierung insbesondere durch eine oder mehrere in der Personalisierungseinheit (PE) hinterlegte Steuerkommandos erfolgt.

4. Verfahren nach einem der vorhergehenden Ansprüche, **dadurch gekennzeichnet, dass** die Personalisierung in Schritt c) von einer Personalisierungseinheit (PE) durchgeführt wird, welche mehrere Personalisierungsstationen umfasst.

5. System zur Personalisierung eines tragbaren Datenträgers (1) mit einem in einem Körper (3) des tragbaren Datenträgers (3) vorgesehenen Chip (2), mit einer Personalisierungseinheit (PE) und einer separat von der Personalisierungseinheit (PE) ausgebildeten Personalisierungsstelle (P), wobei der tragbare Datenträger (1) der Personalisierungseinheit (PE) bereitgestellt wird, wobei der Chip (2) Daten zur Personalisierung des Körpers (3) des tragbaren Datenträgers (1) enthält, die optische Personalisierungsdaten umfassen, welche in einem nachfolgenden Schritt optisch sichtbar auf den Körper (3) aufgebracht werden, und
der eigentlichen Durchführung der Personalisierung durch die Personalisierungseinheit (PE) eine Authentisierung vorgeschaltet ist, mit der die Berechtigung der Personalisierungseinheit (PE) zur Durchführung der Personalisierung des bereitgestellten tragbaren Datenträgers (1) überprüft wird,
**dadurch gekennzeichnet, dass**
in der Personalisierungsstelle (P) die Daten zur Personalisierung des Körpers (3) des tragbaren Datenträgers (1) auf den Chip (2) übertragen werden und der tragbare Datenträger (1) anschließend zur Personalisierungseinheit (PE) transportiert wird, wobei die Daten zur Personalisierung des Körpers (3) des tragbaren Datenträgers (1) verschlüsselt auf den Chip (2) des tragbaren Datenträgers (1) übertragen und die verschlüsselten Daten durch den Chip (2) entschlüsselt werden, und
die Personalisierungseinheit (PE) von dem Chip (2) des tragbaren Datenträgers (1) Daten zur Personalisierung des Körpers (3) des tragbaren Datenträgers (1) empfängt und den Körper (3) basierend auf den empfangenen Personalisierungsdaten personalisiert, wobei die Personalisierungseinheit (PE) von dem Chip (2) neben den Daten zur Personalisierung des Körpers (3) des tragbaren Datenträgers (1) ein oder mehrere Steuerkommandos empfängt, mittels derer die Personalisierungseinheit (PE) bei der Durchführung der Personalisierung gesteuert wird, wobei die Steuerkommandos schrittweise in der Personalisierungseinheit (PE) empfangen werden, wobei nach dem Empfang eines Steuerkommandos zunächst die Ausführung des Steuerkommandos in der Personalisierungseinheit (PE) veranlasst und anschließend das nächste Steuerkommando empfangen wird

6. System nach Anspruch 5, **dadurch gekennzeichnet, dass** der tragbare Datenträger (1) eine Chipkarte ist.

## Claims

1. A method for personalizing a portable data carrier (1), in particular a chip card, having a chip (2) provided in a body (3) of the portable data carrier (3), wherein
a) there is supplied to a personalization unit (PE) a portable data carrier (1) whose chip (2) contains data for personalizing the body (3) of the portable data carrier (1) which comprise optical personalization data which, in a subsequent step, are applied to the body (3) so as to be optically visible;
b) the data for personalizing the body (3) of the portable data carrier (1) are transferred to the chip (2) of the portable data carrier (1) at a personalization place (P) configured separately from the personalization unit (PE), and the portable data carrier (1) is subsequently transported to the personalization unit (PE),
c) the personalization unit (PE) receives the data for personalizing the body (3) of the portable data carrier (1) from the chip (2) of the portable data carrier (1), and personalizes the body (3) on the basis of the received data,
**characterized in that** the data for personalizing the body (3) of the portable data carrier (1) are transferred to the chip (2) of the portable data carrier (1) in encrypted form, the encrypted data being decrypted by the chip (2),
that the actual carrying out of the personalization by the personalization unit (PE) is preceded by an authentication with which the authorization of the personalization unit (PE) for carrying out the personalization of the supplied portable data carrier (1) is checked,
that the personalization unit (PE) in step c) receives from the chip (2) of the portable data carrier (1), besides the data for personalizing the body (3) of the portable data carrier (1), one or several control commands by means of which the personalization unit (PE) is controlled upon the carrying out of the personalization, and that the control commands are received in the personalization unit (PE) stepwise, wherein after the reception of one control command the execution of the control command in the personalization unit (PE) is first initiated and subsequently the next control command is received.

2. The method according to claim 1, **characterized in that** the chip (2) of the portable data carrier (1) contains, besides the data for personalizing the body (3) of the portable data carrier (1), personalization data with which the chip (2) is electrically personalized.

3. The method according to either of the preceding claims, **characterized in that** the personalization unit (PE) in step c) first receives all the data for personalizing the body (3) of the portable data carrier (1) from the chip (2) of the portable data carrier (1) and subsequently personalizes the body (3) on the basis of the received data, the personalization being effected in particular through one or several control commands deposited in the personalization unit (PE).

4. The method according to any of the preceding claims, **characterized in that** the personalization is carried out in step c) by a personalization unit (PE) which comprises several personalization stations.

5. A system for personalizing a portable data carrier (1) having a chip (2) provided in a body (3) of the portable data carrier (3), having a personalization unit (PE) and a personalization place (P) configured separately from the personalization unit (PE), wherein
the portable data carrier (1) is supplied to the personalization unit (PE), the chip (2) containing data for personalizing the body (3) of the portable data carrier (1) which comprise optical personalization data which, in a subsequent step, are applied to the body (3) so as to be optically visible, and
the actual carrying out of the personalization by the personalization unit (PE) is preceded by an authentication with which the authorization of the personalization unit (PE) for carrying out the personalization of the supplied portable data carrier (1) is checked,
**characterized in that**
at the personalization place (P) the data for personalizing the body (3) of the portable data carrier (1) are transferred to the chip (2), and the portable data carrier (1) is subsequently transported to the personalization unit (PE), the data for personalizing the body (3) of the portable data carrier (1) being transferred to the chip (2) of the portable data carrier (1) in encrypted form and the encrypted data being decrypted by the chip (2), and
the personalization unit (PE) receives data for personalizing the body (3) of the portable data carrier (1) from the chip (2) of the portable data carrier (1), and personalizes the body (3) on the basis of the received personalization data, the personalization unit (PE) receiving from the chip (2), besides the data for personalizing the body (3) of the portable data carrier (1), one or several control commands by means of which the personalization unit (PE) is controlled upon the carrying out of the personalization, the control commands being received in the personalization unit (PE) stepwise, wherein after the reception of one control command the execution of the control command in the personalization unit (PE) is first initiated and subsequently the next control command is received.

6. The system according to claim 5, **characterized in that** the portable data carrier (1) is a chip card.

## Revendications

1. Procédé de personnalisation d'un support de données (1) portable, notamment d'une carte à puce, ayant une puce (2) prévue dans un corps (3) du support de données (3) portable, dans lequel
a) il est mis à la disposition d'une unité de personnalisation (PE) un support de données (1) portable dont la puce (2) contient des données qui sont destinées à la personnalisation du corps (3) du support de données (1) portable et qui comprennent des données optiques de personnalisation qui, lors d'une étape subséquente, sont appliquées de manière optiquement visible sur le corps (3);
b) les données destinées à la personnalisation du corps (3) du support de données (1) portable sont transmises dans un point de personnalisation (P) réalisé séparément de l'unité de personnalisation (PE) sur la puce (2) du support de données (1) portable, et le support de données (1) portable est ensuite transporté à l'unité de personnalisation (PE),
c) l'unité de personnalisation (PE) reçoit de la part de la puce (2) du support de données (1) portable les données destinées à la personnalisation du corps (3) du support de données (1) portable et personnalise le corps (3) sur la base des données reçues,
**caractérisé en ce que** les données destinées à la personnalisation du corps (3) du support de données (1) portable sont transmises de manière cryptée sur la puce (2) du support de données (1) portable, les données cryptées étant décryptées par la puce (2),
**en ce que** l'exécution proprement dite de la personnalisation par l'unité de personnalisation (PE) est précédée en amont par une authentification avec laquelle l'autorisation de l'unité de personnalisation (PE) d'exécuter la personnalisation du support de données (1) mis à disposition est vérifiée,
**en ce que** l'unité de personnalisation (PE), à l'étape c), reçoit de la part de la puce (2) du support de données (1) portable, en plus des données destinées à la personnalisation du corps (3) du support de données (1) portable, un ou plusieurs ordres de commande au moyen desquels l'unité de personnalisation (PE) est commandée lors de l'exécution de la personnalisation, et **en ce que** les ordres de commande sont reçus pas à pas dans l'unité de personnalisation (PE) et, après la réception d'un ordre de commande, tout d'abord l'exécution de l'ordre de commande est occasionnée dans l'unité de personnalisation (PE), à la suite de quoi l'ordre de commande suivant est reçu.

2. Procédé selon la revendication 1, **caractérisé en ce que** la puce (2) du support de données (1) portable contient, en plus des données destinées à la personnalisation du corps (3) du support de données (1) portable, des données de personnalisation avec lesquelles la puce (2) est personnalisée électriquement.

3. Procédé selon une des revendications précédentes, **caractérisé en ce que** l'unité de personnalisation (PE), à l'étape c), reçoit tout d'abord toutes les données destinées à la personnalisation du corps (3) du support de données (1) portable de la part de la puce (2) du support de données (1) portable, puis personnalise le corps (3) sur la base des données reçues, la personnalisation ayant lieu notamment par un ou plusieurs ordres de commande déposés dans l'unité de personnalisation (PE).

4. Procédé selon une des revendications précédentes, **caractérisé en ce que** la personnalisation, à l'étape c), est exécutée par une unité de personnalisation (PE) qui comprend plusieurs stations de personnalisation.

5. Système de personnalisation d'un support de données (1) portable ayant une puce (2) prévue dans un corps (3) du support de données (3) portable, ayant une unité de personnalisation (PE) et un point de personnalisation (P) réalisé séparément de l'unité de personnalisation (PE),
le support de données (1) étant mis à disposition de l'unité de personnalisation (PE), la puce (2) contenant des données destinées à la personnalisation du corps (3) du support de données (1) portable qui comprennent des données optiques de personnalisation qui, lors d'une étape subséquente, sont appliquées de manière optiquement visible sur le corps (3), et
l'exécution proprement dite de la personnalisation par l'unité de personnalisation (PE) étant précédée en amont par une authentification avec laquelle l'autorisation de l'unité de personnalisation (PE) d'exécuter la personnalisation du support de données (1) mis à disposition est vérifiée,
**caractérisé en ce que**,
dans le point de personnalisation (P), les données destinées à la personnalisation du corps (3) du support de données (1) portable sont transmises sur la puce (2) et le support de données (1) portable est ensuite transporté à l'unité de personnalisation (PE), les données destinées à la personnalisation du corps (3) du support de données (1) portable étant transmises de manière cryptée sur la puce (2) du support de données (1) portable, et les données cryptées étant décryptées par la puce (2), et
l'unité de personnalisation (PE) reçoit de la part de la puce (2) du support de données (1) portable des données destinées à la personnalisation du corps (3) du support de données (1) portable et personnalise le corps (3) sur la base des données de personnalisation reçues, l'unité de personnalisation (PE) recevant de la part de la puce (2), en plus des données destinées à la personnalisation du corps (3) du support de données (1) portable, un ou plusieurs ordres de commande au moyen desquels l'unité de personnalisation (PE) est commandée lors de l'exécution de la personnalisation, les ordres de commande étant reçus pas à pas dans l'unité de personnalisation (PE), et, après la réception d'un ordre de commande, tout d'abord l'exécution de l'ordre de commande étant occasionnée dans l'unité de personnalisation (PE), à la suite de quoi l'ordre de commande suivant est reçu.

6. Système selon la revendication 5, **caractérisé en ce que** le support de données (1) portable est une carte à puce.
